# EUROPEAN PATENT SPECIFICATION

(11) **EP 3 385 594 B1**
(45) Date of publication and mention of the grant of the patent: **13.05.2020**
(21) Application number: 18159746.9
(22) Date of filing: 02.03.2018
(51) Int. Cl.: F16L 55/033, F16L 55/035, F01N 13/18, B29C 45/00

(54) **INSULATOR**
ISOLATOR
ISOLATEUR

(30) Priority: 06.04.2017 JP 2017075730
(43) Date of publication of application: 10.10.2018
(73) Proprietor: Toyo Tire Corporation, Itami-shi, Hyogo 664-0847 (JP)
(72) Inventor: EDO, Tomoyoshi, Itami-shi, Hyogo 664-0847 (JP)
(74) Representative: Prüfer & Partner mbB Patentanwälte · Rechtsanwälte

(56) References cited:
- WO-A1-2016/027552
- JP-A- 2001 295 645
- JP-A- 2005 146 889
- US-A1- 2011 108 678

## Description

### [Technical Field]

The present invention relates to an insulator configured to elastically support an exhaust pipe to a vehicle body.

### [Background Art]

There has been known an insulator made of a rubber-like elastic body that elastically supports an exhaust pipe to a vehicle body so as to reduce vibration transmitted from an engine to the vehicle body via the exhaust pipe (Patent Literature 1). In the technique disclosed in Patent Literature 1, the insulator includes a first portion having a first engagement hole engaged with a side of the vehicle body, a second portion having a second engagement hole engaged with a side of the exhaust pipe, and a pair of coupling portions configured to couple those portions. The first portion and the second portion include mutually facing first stopper surface and second stopper surface, respectively, between the pair of the coupling portions with an interval, and the first stopper surface and the second stopper surface include a plurality of protrusions projecting to mutually corresponding positions. The protrusions disposed to extend in pass-through directions of the first engagement hole and the second engagement hole mesh with one another when a load is input, thus reducing large displacement vibration.

### [Citation List]

### [Patent Literature]

[Patent Literature 1] JP-A No. 2011-102117

### [Summary of Invention]

### [Technical Problem]

However, with the above-described conventional technique, when the first stopper surface collides against the second stopper surface, the plurality of protrusions disposed to extend in the pass-through directions of the first engagement hole and the second engagement hole mesh with one another. This causes a load-displacement curve on the collision to sharply rise easily, thus causing air to be easily sealed between the protrusions. Therefore, it is a problem that a relatively large abnormal noise occurs on the collision of the first stopper surface and the second stopper surface.

The present invention has been achieved in view of the above-mentioned circumstances, and it is an object thereof to provide an insulator configured to reduce occurrence of an abnormal noise.

### [Solution to Problem]

The present invention is defined by an insulator according to claim 1. In order to achieve the object, there is provided an insulator configured to elastically support an exhaust pipe to a vehicle body. The insulator is made of a rubber-like elastic body. The insulator includes a first portion, a second portion, a pair of coupling portions, a first stopper surface and a second stopper surface, and a plurality of protrusions. The first portion includes a first engagement hole engaged with a side of the vehicle body. The second portion includes a second engagement hole engaged with a side of the exhaust pipe. The second portion is arranged underneath the first portion across a predetermined virtual axis. The pair of the coupling portions are configured to couple the first portion to the second portion. The pair of the coupling portions are separately arranged on both sides in an axis-perpendicular direction of the virtual axis. The first stopper surface and the second stopper surface are formed on the first portion and the second portion, respectively, between the pair of the coupling portions with intervals to the coupling portions. The plurality of the protrusions project from at least one of the first stopper surface and the second stopper surface. The plurality of the protrusions are arranged in an axial direction and the axis-perpendicular direction of the virtual axis.

### [Advantageous Effects of Invention]

With the insulator according to a first aspect, the plurality of the protrusions projecting from at least one of the first stopper surface and the second stopper surface are arranged in an axial direction and the axis-perpendicular direction of a predetermined virtual axis enclosed by the first portion, the second portion, and the pair of the coupling portions. Therefore, when the first stopper surface or the second stopper surface that includes the protrusions collides against another portion due to an input of a load, a rise of a load-displacement curve can be relaxed and sealed air between colliding surfaces can be reduced. As a result, occurrence of an abnormal noise on inputting the load can be reduced.

With the insulator according to a second aspect, at least one of the first stopper surface and the second stopper surface has an inclined surface where the protrusions are disposed. The inclined surface inclines so as to separate from a virtual surface while separating from a parting line. The virtual surface is positioned between facing portions. The virtual surface includes the virtual axis or is parallel to the virtual axis. When the inclined surface collides against the facing portion, not only the protrusions but also the inclined surface can loosen the rise of the load-displacement curve, and reduce the sealed air between the colliding surfaces. As a result, the occurrence of the abnormal noise on inputting the load can be more reduced.

The protrusions are disposed on the inclined surface, and have heights smaller than a difference-in-height of the inclined surface in the axis-perpendicular direction. Then, in addition to the effect of the first aspect, the insulator including the protrusions can be easily removed from the molds in the axial direction of the virtual axis.

With the insulator according to a third aspect, since the parting line is configured on an end side in the axial direction of the first stopper surface or the second stopper surface, an extension of the first stopper surface or the second stopper surface on a periphery of the parting line can be reduced. This ensures reducing occurrence of a crack starting from the parting line, thus improving durability of the insulator, in addition to the effect of the second aspect.

With the insulator according to a fourth aspect, the parting line is configured on a central portion in the axial direction of the first stopper surface or the second stopper surface. In this case, compared with the case where the parting line is configured on the end side in the axial direction of the first stopper surface or the second stopper surface, an angle between the virtual surface and the inclined surface can be increased when the difference-in-heights in the axis-perpendicular direction of the inclined surfaces are configured to be identical in both cases. As a result, in addition to the effect of the second aspect, the insulator can be more easily removed from the molds.

With the insulator according to a fifth aspect, the protrusions have intervals such that spaces between the adjacent protrusions are prevented from being filled in a state where the protrusions are collapsed between the first stopper surface and the second stopper surface. Accordingly, in addition to the effects of any one of the first to fourth aspects, the rise of the load-displacement curve on the collision of the first stopper surface and the second stopper surface can be more relaxed, and the sealed air between the first stopper surface and the second stopper surface can be more reduced.

With the insulator according to a sixth aspect, the plurality of the protrusions are randomly configured in height. This varies timings of starts of elastic deformations of the plurality of the protrusions on the collision of the first stopper surface and the second stopper surface. As a result, in addition to the effects of any one of the first to fifth aspects, the rise of the load-displacement curve on the collision of the first stopper surface and the second stopper surface can be more relaxed, and the sealed air between the first stopper surface and the second stopper surface can be more reduced.

With the insulator according to a seventh aspect, the plurality of the protrusions are randomly positioned. This varies how the plurality of the protrusions elastically deform depending on a contact position of the first stopper surface and the second stopper surface. As a result, in addition to the effects of any one of the first to sixth aspects, the rise of the load-displacement curve on the collision of the first stopper surface and the second stopper surface can be more relaxed, and the sealed air between the first stopper surface and the second stopper surface can be more reduced.

With the insulator according to an eighth aspect, the protrusions are disposed at least on portions of the first stopper surface or the second stopper surface. The portions of the first stopper surface or the second stopper surface contactably face the coupling portions. Accordingly, even if the first stopper surface or the second stopper surface collides against the coupling portion, the rise of the load-displacement curve can be relaxed, and the sealed air between the first stopper surface or the second stopper surface and the coupling portion can be reduced.

Here, when the protrusions are disposed on the coupling portions, the durability of the coupling portions is possibly reduced or a spring constant possibly varies. In contrast, the protrusions are disposed on the first stopper surface or the second stopper surface excluding the coupling portions. Therefore, in addition to the effects of any one of the first to seventh aspects, the variation of the spring constant can be prevented while ensuring the durability of the coupling portions, and the occurrence of the abnormal noise on inputting the load can be more reduced.

### [Brief Description of Drawings]

[FIG. 1] FIG. 1 is a front view of an insulator according to a first embodiment of the present invention.
[FIG. 2] FIG. 2 is a cross-sectional view of the insulator taken along the line II-II in FIG. 1.
[FIG. 3] FIG. 3 is a front view of an insulator according to a second embodiment.
[FIG. 4] FIG. 4 is a cross-sectional view of the insulator taken along the line IV-IV in FIG. 3.
[FIG. 5] FIG. 5 is a front view of an insulator according to a third embodiment.
[FIG. 6] FIG. 6 is a front view of an insulator according to a fourth embodiment.

### [Description of Embodiments]

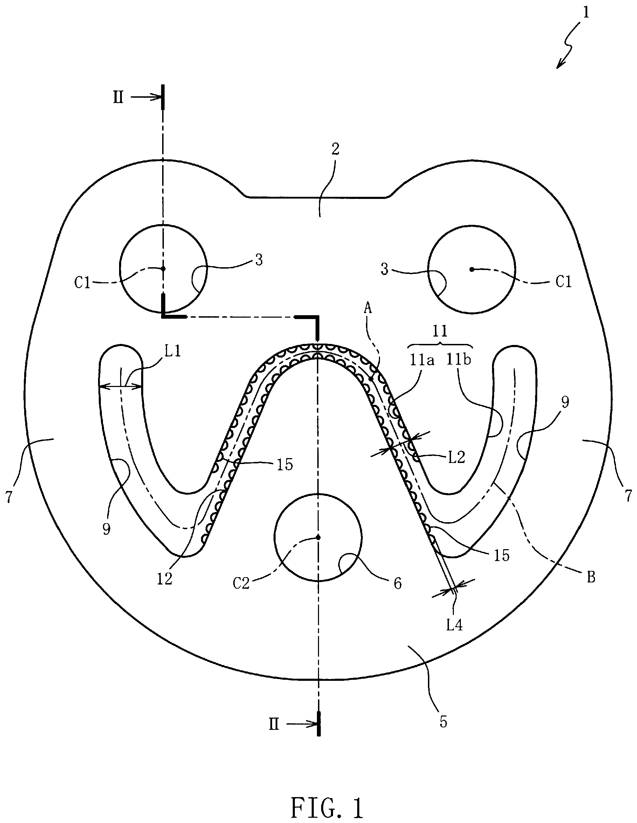

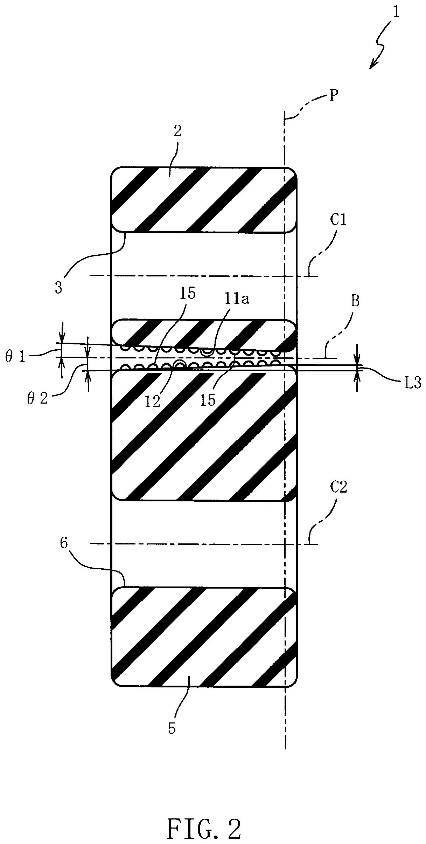

The following describes preferred embodiments of the present invention with reference to attached drawings. First, with reference to FIG. 1 and FIG. 2, a description will be given of an insulator 1 according to a first embodiment of the present invention. FIG. 1 is a front view of the insulator 1. FIG. 2 is a cross-sectional view of the insulator 1 taken along the line II-II in FIG. 1. In the following descriptions, a vertical direction, a front-rear direction, and a lateral direction in FIG. 1 are defined as a vertical direction, a front-rear direction, and a lateral direction of the insulator 1, respectively. The vertical direction of the insulator 1 is a vertical direction of a vehicle where the insulator 1 is included. However, the front-rear direction and the lateral direction of the insulator 1 do not necessarily match the front-rear direction and the lateral direction of the vehicle.

As illustrated in FIG. 1 and FIG. 2, the insulator 1 is a member in an approximately circular shape in front view, and is integratedly formed of a rubber-like elastic body. The insulator 1 mainly includes a first portion 2 mounted to a vehicle body (not illustrated) side, a second portion 5 mounted to an exhaust pipe (not illustrated) side, a pair of coupling portions 7 configured to couple the first portion 2 to the second portion 5, and a plurality of protrusions 15 projecting from the first portion 2 and the second portion 5.

Underneath the first portion 2, the second portion 5 is arranged across a predetermined virtual axis A. The first portion 2 includes two first engagement holes 3 passing through in an axial direction (the front-rear direction) of the virtual axis A. The second portion 5 includes a second engagement hole 6 passing through in the axial direction of the virtual axis A. The first engagement hole 3 and the second engagement hole 6 have a central axis C1 and a central axis C2, respectively, that are parallel to the virtual axis A.

The two first engagement holes 3 are engaged with two pins (not illustrated) mounted on the vehicle body, and the second engagement hole 6 is engaged with a pin (not illustrated) mounted on the exhaust pipe, thus suspending and supporting the exhaust pipe to the vehicle body via the insulator 1. The two pins on the vehicle body side are inserted into the respective two first engagement holes 3, thus preventing the insulator 1 from swinging with respect to the vehicle body.

The first portion 2 is coupled to the second portion 5 by the pair of the coupling portions 7 separately arranged on both sides in an axis-perpendicular direction of the virtual axis A, and the first portion 2 and the second portion 5 are separately arranged in the vertical direction. Accordingly, the insulator 1 includes a space in a W shape in front view enclosed by the first portion 2, the second portion 5, and the pair of the coupling portions 7 so as to pass through the insulator 1.

The pair of the coupling portions 7 include internal surfaces 9 each facing inside. The internal surfaces 9 have curved shapes depressed to the virtual axis A side in front view. The internal surfaces 9 are formed parallel to the virtual axis A and the central axes C1 and C2.

The first portion 2 and the second portion 5 include a first stopper surface 11 and a second stopper surface 12, respectively, between the pair of the coupling portions 7 with intervals to the coupling portions 7. The first stopper surface 11 and the second stopper surface 12 are each continuous with the internal surfaces 9. Here, a surface including the virtual axis A or a surface parallel to the virtual axis A, positioned between facing two surfaces among the first stopper surface 11, the second stopper surface 12, and the internal surfaces 9, is defined as a virtual surface B.

The first stopper surface 11 is a surface in a W shape in front view. The first stopper surface 11 includes an inclined surface 11a facing the second stopper surface 12, and outer surfaces 11b facing the internal surfaces 9. The inclined surface 11a is formed in an inverted V shape in front view. The inclined surface 11a inclines so as to separate from the virtual surface B while separating from the parting line P.

The parting line P is a burr formed between a fixed mold and a movable mold of a metallic mold (not illustrated) for molding the insulator 1, and a difference in level due to a displacement between the fixed mold and the movable mold. The parting line P is arranged on a plane perpendicular to the virtual axis A and the central axes C1 and C2. The parting line P is configured on an end side (a starting point of a chamfered portion described later) of the inclined surface 11a in the axial direction of the virtual axis A. Therefore, the inclined surface 11a is disposed on only one side with respect to the parting line P in the axial direction of the virtual axis A, and not disposed on the other side.

The outer surface 11b is formed parallel to the virtual surface B (the virtual axis A), and formed along the internal surface 9. An interval L1 between the outer surface 11b and the internal surface 9 is configured to be approximately constant. The interval L1 is configured to be greater than an interval L2 on the parting line P. The interval L2 is an interval between the inclined surface 11a and the second stopper surface 12 facing in the lateral direction.

The second stopper surface 12 (the inclined surface) is a surface in an inverted V shape in front view, and disposed between the inclined surface 11a in the inverted V shape. The second stopper surface 12 is formed in a shape approximately identical to the shape of the inclined surface 11a in front view. The second stopper surface 12 inclines so as to separate from the virtual surface B while separating from the parting line P.

The inclined surface 11a and the second stopper surface 12 are formed in an approximately straight line on a cross section in the axis-perpendicular direction of the virtual axis A. The inclined surface 11a and the second stopper surface 12 are R chamfered such that both ends in the axial direction of the virtual axis A separate from the virtual surface B toward the outside. Not limiting to the case where both ends of the inclined surface 11a and the second stopper surface 12 are R chamfered, both ends may be C chamfered.

The parting line P is configured at a starting point of the chamfered portion. This ensures the insulator 1 on the chamfered portion side with respect to the parting line P to be easily removed from the molds. It is obviously allowed to configure the parting line P on the ends of the inclined surface 11a and the second stopper surface 12 in the axial direction of the virtual axis A. However, in this case, since the chamfered portion is disposed on the center side in the axial direction with respect to the parting line P, it becomes difficult to remove the insulator 1 from the mold.

On the cross section in the axis-perpendicular direction of the virtual axis A, an angle θ1 between the virtual surface B and the inclined surface 11a is configured to be identical to an angle θ2 between the virtual surface B and the second stopper surface 12. The angles θ1 and θ2 are configured to be 1° to 5°, and details will be described later. Furthermore, preferably, the angles θ1 and θ2 are configured to be 2° to 4°.

The protrusions 15 are portions projecting from the inclined surface 11a and the second stopper surface 12. A plurality of the protrusions 15 are disposed in the axial direction and the axis-perpendicular direction of the virtual axis A. While the plurality of the protrusions 15 are regularly aligned in FIG. 1 and FIG. 2, preferably, the plurality of the protrusions 15 are randomly disposed.

The metallic mold for molding the insulator 1 has surfaces for molding the inclined surface 11a and the second stopper surface 12, and unevennesses are formed on the surfaces by etching, sand-blasting, shot-blasting, and the like. This forms the protrusions 15 on the inclined surface 11a and the second stopper surface 12 of the insulator 1 as a formed product using the metallic mold. Forming the protrusions 15 in such way ensures randomly configuring heights L4, shapes, intervals, and positions of the plurality of protrusions 15 in a predetermined range.

The height L4 of the protrusion 15 is configured to be smaller than a difference-in-height L3 of the inclined surface 11a and the second stopper surface 12 in the axis-perpendicular direction of the virtual axis A. The intervals of the plurality of the protrusions 15 are configured to an extent where spaces between adjacent protrusions 15 are prevented from being filled when the protrusions 15 collapse.

According to the insulator 1, when the exhaust pipe (not illustrated) moves in the vertical direction in accordance with vibration of the engine and travelling of the vehicle, a load is input to the insulator 1 from the exhaust pipe, and the first portion 2, the second portion 5, and the coupling portions 7 vertically expand and contract to absorb the vibration. The absorption of the vibration by the insulator 1 depends on especially the expansion and contraction of the coupling portions 7.

When a large compressive load in the vertical direction is input to the insulator 1, the inclined surface 11a of the first stopper surface 11 collides against the second stopper surface 12, thus reducing an excessive deformation of the insulator 1. As a result, the insulator 1 can restrict an excessive relative movement of the exhaust pipe with respect to the vehicle body.

When the inclined surface 11a collides against the second stopper surface 12, an occurring collision sound (abnormal noise) becomes large as sharply a load-displacement curve rises. The more easily the air is sealed between the inclined surface 11a and the second stopper surface 12, the larger the abnormal noise occurs.

Since the inclined surface 11a and the second stopper surface 12 includes the plurality of protrusions 15 in the axial direction and the axis-perpendicular direction of the virtual axis A, elastic deformations of the protrusions 15 ensure loosening the rise of the load-displacement curve on the collision of the surfaces. Furthermore, the protrusions 15 cause the air between the inclined surface 11a and the second stopper surface 12 to easily escape, thus reducing the sealed air between the surfaces. As a result, the occurrence of the abnormal noise, caused by the collision of the inclined surface 11a and the second stopper surface 12 on inputting the load in the vertical direction, can be reduced.

The random positions of the plurality of the protrusions 15 vary how the plurality of the protrusions 15 elastically deform depending on a contact position of the inclined surface 11a and the second stopper surface 12. The random heights L4 of the plurality of the protrusions 15 vary timings of starts of the elastic deformations of the plurality of the protrusions 15 on the collision of the inclined surface 11a and the second stopper surface 12. As a result, the rise of the load-displacement curve on the collision of the inclined surface 11a and the second stopper surface 12 can be more relaxed, and the sealed air between the surfaces can be more reduced.

The intervals of the plurality of the protrusions 15 are configured to the extent where the spaces between the adjacent protrusions 15 are prevented from being filled when the protrusions 15 collapse. This ensures more loosening the rise of the load-displacement curve on the collision of the inclined surface 11a and the second stopper surface 12, and more reducing the sealed air between the surfaces.

Furthermore, the inclined surface 11a and the second stopper surface 12 incline so as to separate from the virtual surface B while separating from the parting line P. Therefore, on the collision of the inclined surface 11a and the second stopper surface 12, a contacted area (a contact position) of the surfaces can be gradually increased from the parting line P side. Accordingly, not only the protrusions 15, but also the inclinations of the inclined surface 11a and the second stopper surface 12 ensure loosening the rise of the load-displacement curve on the collision of the surfaces, and ensure reducing the sealed air between the surfaces. As a result, the occurrence of the abnormal noise caused by the collision of the inclined surface 11a and the second stopper surface 12 on inputting the load can be more reduced.

Here, the insulator 1 is obtained such that the materials are injected between the fixed mold and the movable mold to perform vulcanization molding on a formed product, and the formed product is removed from the molds in the axial direction of the virtual axis A. At this time, due to the protrusions 15 disposed on the inclined surface 11a and the second stopper surface 12, the insulator 1 made of the rubber-like elastic body requires to be forcibly removed from the metallic molds (the protrusions 15 are elastically deformed to be forcibly removed from the molds).

However, since the inclined surface 11a and the second stopper surface 12 incline with respect to the virtual surface B, the insulator 1 that includes the protrusions 15 is easily removed from the molds. Furthermore, since the heights L4 of the protrusions 15 are smaller than the difference-in-heights L3 of the inclined surface 11a and the second stopper surface 12, the insulator 1 that includes the protrusions 15 is easily removed from the molds.

Preferably, the height L4 of the protrusion 15 is configured to be smaller than a half of the difference-in-height L3, and more preferably, the height L4 of the protrusion 15 is configured to be smaller than a quarter of the difference-in-heights L3. As the height L4 of the protrusion 15 is decreased with respect to the difference-in-height L3, the insulator 1 that includes the protrusions 15 can be more easily removed from the molds.

When the angles θ1 and θ2 between the virtual surface B, and the inclined surface 11a and the second stopper surface 12 are less than 1°, the protrusions 15 require to be more largely elastically deformed in removing the insulator 1 from the molds. Then, not only the insulator 1 has difficulty in being removed from the molds, but also a product lifetime of the metallic mold easily decreases because of the metallic mold shaved off and the protrusions 15 peeled off from the inclined surface 11a and the second stopper surface 12 to cover the unevenness of the metallic mold.

When the angles θ1 and θ2 are greater than 5°, the difference-in-height L3 becomes large. As the difference-in-height L3 increases, an increasing tendency of the area where the inclined surface 11a contacts the second stopper surface 12 becomes gentle relative to the load input to the insulator 1.

Therefore, as the difference-in-height L3 increases, an increasing tendency of the load-displacement curve on the collision of the inclined surface 11a and the second stopper surface 12 becomes gentle, thus increasing a displacement amount of the second engagement hole 6 relative to the first engagement hole 3 until a compression deformation of the insulator 1 relative to the input load stops. As a result, the restriction on the relative movement of the exhaust pipe with respect to the vehicle body by the insulator 1 becomes difficult to be performed as aimed, and durability of the insulator 1 possibly decreases due to the excessive compression of the insulator 1 on the parting line P.

In this embodiment, since the angles θ1 and θ2 are configured to be 1° to 5°, the insulator 1 is easily removed from the molds, and the product lifetime of the metallic molds for molding the insulator 1 can be reduced to decrease. Furthermore, the restriction on the excessive relative movement of the exhaust pipe with respect to the vehicle body by the insulator 1 can be easily performed as aimed, and the durability of the insulator 1 can be reduced to decrease.

Furthermore, preferably, the angles θ1 and θ2 are configured to be 2° to 4°. In this case, the insulator 1 can be more easily removed from the molds, and the product lifetime of the metallic molds for molding the insulator 1 can be more reduced to decrease. In addition, the restriction on the excessive relative movement of the exhaust pipe with respect to the vehicle body by the insulator 1 can be more easily performed as aimed, and the durability of the insulator 1 can be more reduced to decrease.

The parting line P of the insulator 1 (the inclined surface 11a and the second stopper surface 12) is configured on the end side in the axial direction of the virtual axis A. This ensures decreasing the expansion of the inclined surface 11a and the second stopper surface 12 in accordance with the load input on a periphery (especially, the end side with respect to the parting line P in the axial direction) of the parting line P compared with a case where the parting line P is configured on the central portion in the axial direction of the virtual axis A. Accordingly, since occurrence of a crack starting from the parting line P is reduced, the durability of the insulator 1 can be improved.

When the exhaust pipe is laterally shaken, the first portion 2 and the second portion 5 relatively move in the lateral direction while the coupling portions 7 bend. Since the second stopper surface 12 in the inverted V shape is disposed between the inclined surface 11a in the inverted V shape, even the relative movement in the lateral direction causes the inclined surface 11a to collide against the second stopper surface 12, thus reducing the excessive deformation of the insulator 1. Similarly to the case where the exhaust pipe moves in the vertical direction with respect to the vehicle body, the protrusions 15 and the inclination of the inclined surface 11a and the second stopper surface 12 with respect to the virtual surface B ensure reducing the occurrence of the abnormal noise caused by the collision of the inclined surface 11a and the second stopper surface 12 on inputting the load in the lateral direction.

The interval L1 between the outer surface 11b and the internal surface 9 is configured to be greater than an interval L2 on the parting line P, and the interval L2 is an interval between the inclined surface 11a and the second stopper surface 12 facing in the lateral direction. This causes spaces to exist on both sides in the lateral direction of the first portion 2 and the second portion 5 when the inclined surface 11a contacts the second stopper surface 12 due to the input of the load in the lateral direction. Therefore, after the collision of the inclined surface 11a and the second stopper surface 12, the first portion 2 and the second portion 5 can be easily deformed in the lateral direction, thus ensuring more loosening the rise of the load-displacement curve on the collision of the inclined surface 11a and the second stopper surface 12. As a result, the occurrence of the abnormal noise caused by the collision of the inclined surface 11a and the second stopper surface 12 on inputting the load in the lateral direction can be more reduced.

Furthermore, since the interval L1 is greater than the interval L2, the outer surface 11b is difficult to contact the internal surface 9. This reduces the inhibition on the elastic deformation of the coupling portion 7 due to the contact of the outer surface 11b and the internal surface 9, thus ensuring vibration isolation characteristics of the insulator 1 due to the expansion and contraction of the coupling portion 7 in the vertical direction.

Furthermore, the outer surface 11b is difficult to collide against the internal surface 9, and even if the collision happens, the input load is sufficiently reduced due to the collision of the inclined surface 11a and the second stopper surface 12, thus reducing the occurrence of the abnormal noise caused by the collision of the outer surface 11b and the internal surface 9. Therefore, the occurrence of the abnormal noise on inputting the load in the lateral direction can be sufficiently reduced without disposing the protrusions 15 on the outer surface 11b and the internal surface 9 and without inclining the outer surface 11b and the internal surface 9 with respect to the virtual surface B.

The protrusions 15 disposed only on the necessary portions ensure the insulator 1 including the protrusions 15 to be easily removed from the molds. Since only the surfaces that require to be forcibly removed from the molds due to the protrusions 15 are inclined with respect to the virtual surface B, the insulator 1 is easily removed from the molds, and the insulator 1 is formed in a simple shape so as to easily adjust the vibration isolation characteristics of the insulator 1.

Surely, the outer surface 11b and the internal surface 9 may include the protrusions 15, and the outer surface 11b and the internal surface 9 may be inclined with respect to the virtual surface B. In this case, the occurrence of the abnormal noise caused by the collision of the outer surface 11b and the internal surface 9 is more reduced.

However, the protrusions 15 disposed on the internal surface 9 possibly causes the coupling portion 7 to be easily broken from bases of the protrusions 15 as starting points, and possibly causes a spring constant of the coupling portion 7 to vary so as to significantly vary a spring constant of the insulator 1. In this embodiment, since the protrusions 15 are not disposed on the coupling portions 7, the spring constant of the insulator 1 is prevented from varying while the coupling portions 7 are less likely to be broken to ensure the durability of the insulator 1.

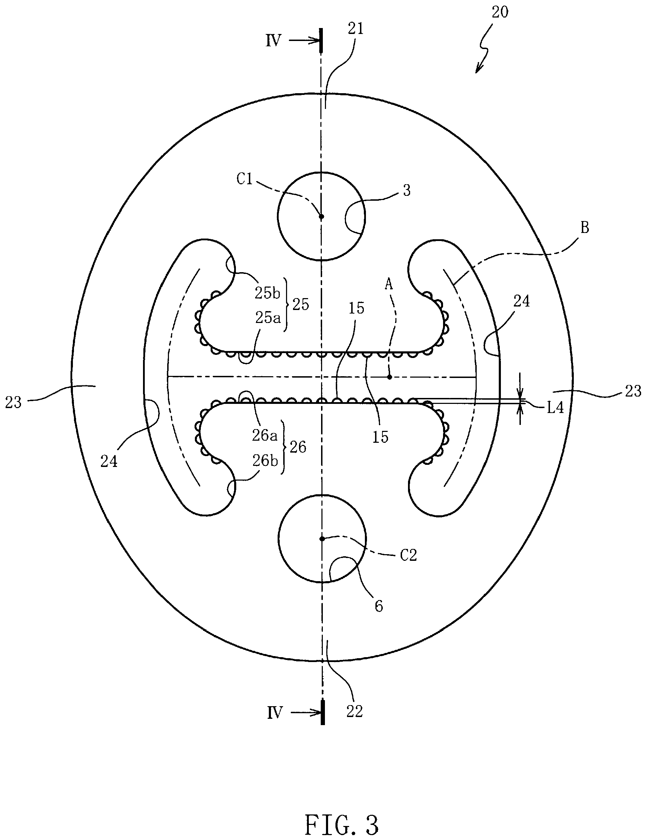

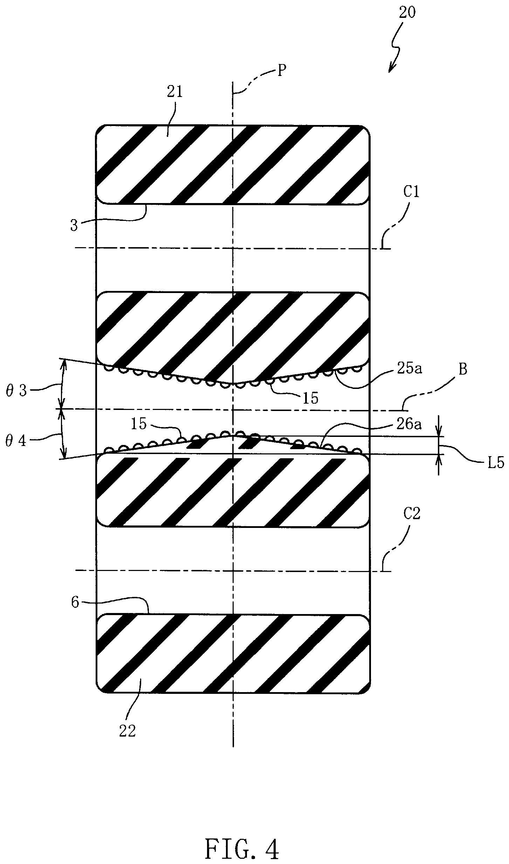

Next, with reference to FIG. 3 and FIG. 4, a second embodiment will be described. In the first embodiment, the description was given of the case where the space enclosed by the first portion 2, the second portion 5, and the coupling portions 7 was formed in the W shape in front view. In contrast, in the second embodiment, a description will be given of a case where a space enclosed by a first portion 21, a second portion 22, and coupling portions 23 is formed in an H shape in front view. Like reference numerals designate corresponding or identical elements to the first embodiment, and therefore such elements will not be further elaborated here.

FIG. 3 is a front view of an insulator 20 in the second embodiment. FIG. 4 is a cross-sectional view of the insulator 20 taken along the line IV-IV in FIG. 3. FIG. 3 is a schematic diagram while omitting illustrations of depths of an inclined surface 25a and an inclined surface 26a inclined in an axial direction of a virtual axis A.

As illustrated in FIG. 3 and FIG. 4, the insulator 20 is a member in an oval-like shape having a long diameter in a vertical direction in front view, and is integratedly formed of a rubber-like elastic body. The insulator 20 is formed to be vertically symmetrical. The insulator 20 mainly includes the first portion 21 mounted to a vehicle body (not illustrated) side, the second portion 22 mounted to an exhaust pipe (not illustrated) side, a pair of coupling portions 23 configured to couple the first portion 21 to the second portion 22, and a plurality of protrusions 15 projecting from the first portion 21 and the second portion 22.

Underneath the first portion 21, the second portion 22 is arranged across a predetermined virtual axis A. The first portion 21 includes a first engagement hole 3 passing through in the axial direction of the virtual axis A. The second portion 22 includes a second engagement hole 6 passing through in the axial direction of the virtual axis A. The first engagement hole 3 is engaged with a pin (not illustrated) mounted on the vehicle body, and the second engagement hole 6 is engaged with a pin (not illustrated) mounted on the exhaust pipe, thus suspending and supporting the exhaust pipe to the vehicle body via the insulator 20.

The first portion 21 is coupled to the second portion 22 by the pair of the coupling portions 23 separately arranged on both sides in an axis-perpendicular direction of the virtual axis A, and the first portion 21 and the second portion 22 are separately arranged in the vertical direction. Accordingly, the insulator 20 includes a space in the H shape in front view enclosed by the first portion 21, the second portion 22, and the pair of the coupling portions 23 so as to pass through the insulator 20.

The pair of the coupling portions 23 include internal surfaces 24 each facing inside. The internal surfaces 24 have curved shapes depressed to the virtual axis A side in front view. The internal surfaces 24 are formed parallel to the virtual axis A and central axes C1 and C2.

The first portion 21 and the second portion 22 include a first stopper surface 25 and a second stopper surface 26, respectively, between the pair of the coupling portions 23 with intervals to the coupling portions 23. The first stopper surface 25 and the second stopper surface 26 are each continuous with the internal surfaces 24. Here, a surface including the virtual axis A or a surface parallel to the virtual axis A positioned between facing two surfaces among the first stopper surface 25, the second stopper surface 26, and the internal surfaces 24 is defined as a virtual surface B.

The first stopper surface 25 has a surface on a second stopper surface 26 side formed in a straight line in a lateral direction in front view. The first stopper surface 25 has surfaces facing the internal surfaces 24 formed in S shapes, where the second stopper surface 26 sides are projected out in the lateral direction, in front view. The second stopper surface 26 has a surface on a first stopper surface 25 side formed in a straight line in the lateral direction in front view. The second stopper surface 26 has surfaces facing the internal surfaces 24 formed in S shapes, where the first stopper surface 25 sides are projected out in the lateral direction, in front view.

The first stopper surface 25 includes the inclined surface 25a where protrusions 15 are disposed, and depressed side surfaces 25b facing the internal surfaces 24. The second stopper surface 26 includes the inclined surface 26a where protrusions 15 are disposed, and depressed side surfaces 26b facing the internal surfaces 24.

The inclined surfaces 25a and 26a are each constituted of a portion where the first stopper surface 25 and the second stopper surface 26 mutually face, and portions that are each a part of the portion facing the internal surface 24. The inclined surfaces 25a and 26a are formed in approximately straight lines on a cross section in the axis-perpendicular direction of the virtual axis A.

The inclined surfaces 25a and 26a incline so as to separate from the virtual surface B while separating from a parting line P. The parting line P is arranged on a plane perpendicular to the virtual axis A and the central axes C1 and C2. The parting line P is configured on the central portions of the inclined surfaces 25a and 26a in the axial direction of the virtual axis A. Therefore, the inclined surfaces 25a and 26a are disposed on both sides of the parting line P in the axial direction of the virtual axis A.

The depressed side surfaces 25b and 26b are formed parallel to the virtual surface B (the virtual axis A). The depressed side surfaces 25b and 26b are formed to be depressed in the lateral direction with respect to the inclined surfaces 25a and 26a facing the internal surface 24. This causes the depressed side surfaces 25b and 26b to be less likely to collide against the internal surface 24 on inputting a load in the lateral direction.

With the insulator 20, when a large compressive load in the vertical direction is input to the insulator 20, the inclined surface 25a of the first stopper surface 25 collides against the inclined surface 26a of the second stopper surface 26, thus reducing an excessive deformation of the insulator 20. Similarly to the first embodiment, the protrusions 15 and the inclinations of the inclined surfaces 25a and 26a ensure reducing the occurrence of the abnormal noise caused by the collision of the inclined surfaces 25a and 26a on inputting the load in the vertical direction.

Since the parting line P is positioned on the central portions of the inclined surfaces 25a and 26a in the axial direction of the virtual axis A, angles θ3 and θ4 between the inclined surfaces 25a and 26a, and the virtual surface B can be configured to be large with respect to difference-in-heights L5 of the inclined surfaces 25a and 26a in the axis-perpendicular direction of the virtual axis A, compared with a case where the parting line P is positioned on end sides of the inclined surfaces 25a and 26a in the axial direction of the virtual axis A. The angle θ3 is configured to be identical to the angle θ4.

That is, in the second embodiment, the difference-in-height L5 is appropriately configured and the restriction on the relative movement of the exhaust pipe with respect to the vehicle body by the insulator 20 is designed as aimed, and then, the angles θ3 and θ4 can be increased depending on the position of the parting line P. This ensures the insulator 20 including the protrusion 15 to be easily removed from the molds.

When the load in the lateral direction is input to the insulator 20, the inclined surfaces 25a and 26a collide against the internal surface 24. While the internal surface 24 does not include the protrusions 15 and the internal surface 24 does not incline with respect to the virtual surface B, the inclined surfaces 25a and 26a include the protrusions 15 and incline with respect to the virtual surface B, thus reducing the occurrence of the abnormal noise on inputting the load in the lateral direction.

As described above, when any one of the surfaces to collide includes the protrusion 15, or any one of the surfaces inclines with respect to the virtual surface B, the occurrence of the abnormal noise on inputting the load can be sufficiently reduced. This is not limited to the time of inputting the load in the lateral direction, and applied to the time of inputting the load in the vertical direction. However, since the load in the vertical direction is likely to be input to the insulator 20, preferably, both the inclined surfaces 25a and 26a facing in the vertical direction include the protrusions 15 and both surfaces incline with respect to the virtual surface B. This ensures more easily reducing the abnormal noise on inputting the load in the vertical direction.

Since the depressed side surfaces 25b and 26b are depressed in the lateral direction with respect to the inclined surfaces 25a and 26a facing the internal surface 24, the depressed side surfaces 25b and 26b are less likely to collide against the internal surface 24 even if the load in the lateral direction is input to the insulator 20. Even if the depressed side surfaces 25b and 26b collide against the internal surface 24, the input load is sufficiently decreased by the collision of the inclined surfaces 25a and 26a against the internal surface 24. Accordingly, the occurrence of the abnormal noise caused by the collision of the depressed side surfaces 25b and 26b against the internal surface 24 is reduced.

Therefore, the occurrence of the abnormal noise on inputting the load in the lateral direction can be sufficiently reduced without disposing the protrusions 15 on the depressed side surfaces 25b and 26b and without inclining the depressed side surfaces 25b and 26b with respect to the virtual surface B. The protrusions 15 disposed only on the necessary portions ensure the insulator 20 including the protrusions 15 to be easily removed from the molds.

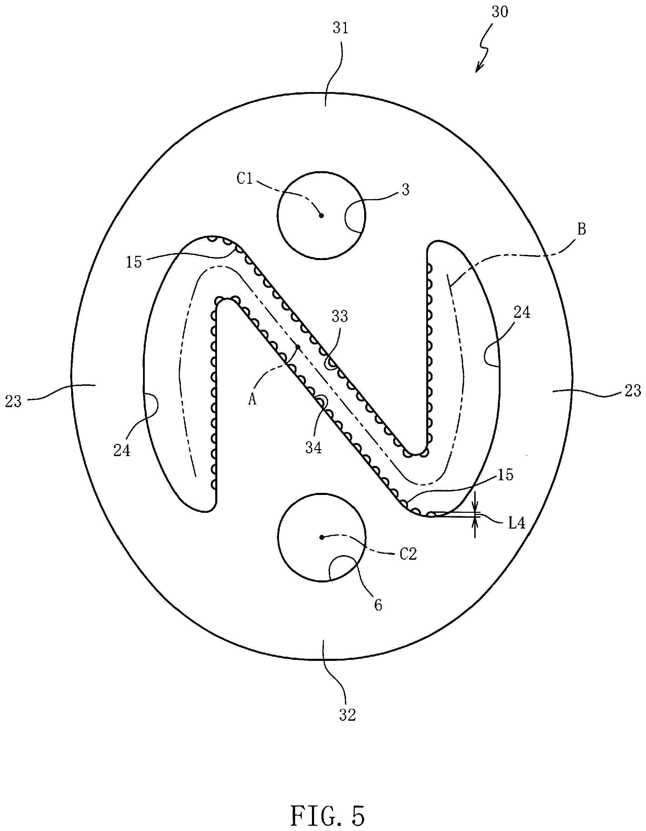

Next, with reference to FIG. 5, a third embodiment will be described. In the first embodiment, the description was given of the case where the space enclosed by the first portion 2, the second portion 5, and the coupling portions 7 was formed in the W shape in front view. In contrast, in the third embodiment, a description will be given of a case where a space enclosed by a first portion 31, a second portion 32, and coupling portions 23 is formed in an N shape in front view. Like reference numerals designate corresponding or identical elements to the first and second embodiments, and therefore such elements will not be further elaborated here. FIG. 5 is a front view of an insulator 30 in the third embodiment.

As illustrated in FIG. 5, the insulator 30 is a member in an oval-like shape in front view, and is integratedly formed of a rubber-like elastic body. The insulator 30 mainly includes the first portion 31 mounted to a vehicle body (not illustrated) side, the second portion 32 mounted to an exhaust pipe (not illustrated) side, a pair of coupling portions 23 configured to couple the first portion 31 to the second portion 32, and a plurality of protrusions 15 projecting from the first portion 31 and the second portion 32.

Underneath the first portion 31, the second portion 32 is arranged across a predetermined virtual axis A. The first portion 31 includes a first engagement hole 3 passing through in an axial direction of the virtual axis A. The second portion 32 includes a second engagement hole 6 passing through in the axial direction of the virtual axis A. The first engagement hole 3 is engaged with a pin (not illustrated) mounted on the vehicle body, and the second engagement hole 6 is engaged with a pin (not illustrated) mounted on the exhaust pipe, thus suspending and supporting the exhaust pipe to the vehicle body via the insulator 30.

The first portion 31 is coupled to the second portion 32 by the pair of the coupling portions 23 separately arranged on both sides in an axis-perpendicular direction of the virtual axis A, and the first portion 31 and the second portion 32 are separately arranged in the vertical direction. Accordingly, the insulator 30 includes a space in the N shape in front view enclosed by the first portion 31, the second portion 32, and the pair of the coupling portions 23 so as to pass through the insulator 30.

The first portion 31 and the second portion 32 include a first stopper surface 33 and a second stopper surface 34 (both are inclined surfaces), respectively, between the pair of the coupling portions 23 with intervals to the coupling portions 23. The first stopper surface 33 and the second stopper surface 34 are each continuous with the internal surfaces 24. Here, a surface including the virtual axis A or a surface parallel to the virtual axis A positioned between facing two surfaces among the first stopper surface 33, the second stopper surface 34, and the internal surfaces 24 is defined as a virtual surface B.

The first stopper surface 33 and the second stopper surface 34 include the protrusions 15 over approximately entire surface. The first stopper surface 33 and the second stopper surface 34 are formed so as to symmetrically project out to one another in right triangle shapes in front view. The second stopper surface 34 is positioned on a left side of the first stopper surface 33.

The first stopper surface 33 and the second stopper surface 34 incline so as to separate from the virtual surface B while separating from a parting line P. The parting line P is positioned, similarly to the first embodiment, on an end side (paper-surface-front side in FIG. 5) in the axial direction of the virtual axis A.

With the insulator 30, when a large compressive load in the vertical direction is input to the insulator 30, and when the exhaust pipe (the second engagement hole 6) relatively moves to the right side with respect to the vehicle body (the first engagement hole 3) due to the input of the load in the lateral direction, the first stopper surface 33 collides against the second stopper surface 34, thus reducing an excessive deformation of the insulator 30. Similarly to the first embodiment, the protrusions 15 and the inclinations of the first stopper surface 33 and the second stopper surface 34 ensure reducing the occurrence of the abnormal noise caused by the collision of the first stopper surface 33 against the second stopper surface 34 on inputting the load.

When the exhaust pipe (the second engagement hole 6) relatively moves to the left side with respect to the vehicle body (the first engagement hole 3) due to the input of the load in the lateral direction, the first stopper surface 33 and the second stopper surface 34 collide against the internal surfaces 24, thus reducing an excessive deformation of the insulator 30. In this case again, the protrusions 15 and the inclinations of the first stopper surface 33 and the second stopper surface 34 ensure reducing the occurrence of the abnormal noise caused by the collisions of the first stopper surface 33 and the second stopper surface 34 against the internal surfaces 24 on inputting the load.

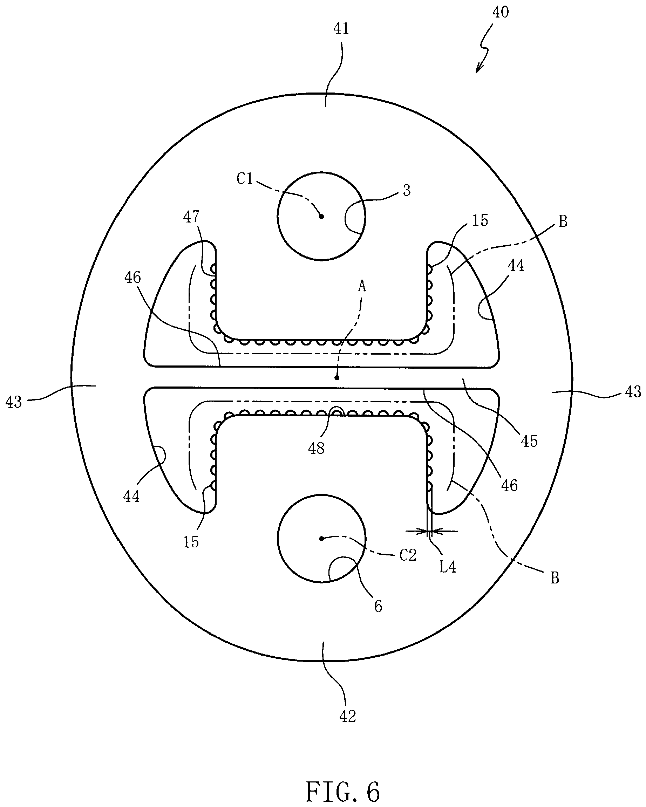

Next, with reference to FIG. 6, a fourth embodiment will be described. In the first embodiment, the description was given of the case where the pair of the coupling portions 7 are coupled to only the first portion 2 and the second portion 5. In contrast, in the fourth embodiment, a description will be given of a case where a pair of coupling portions 43 configured to couple the first portion 41 to the second portion 42 are mutually coupled by an intermediate coupling portion 45. Like reference numerals designate corresponding or identical elements to the first embodiment, and therefore such elements will not be further elaborated here. FIG. 6 is a front view of an insulator 40 in the fourth embodiment.

As illustrated in FIG. 6, the insulator 40 is a member in an oval-like shape in front view, and is integratedly formed of a rubber-like elastic body. The insulator 40 is formed to be vertically symmetrical. The insulator 40 mainly includes a first portion 41 mounted to a vehicle body (not illustrated) side, a second portion 42 mounted to an exhaust pipe (not illustrated) side, a pair of coupling portions 43 configured to couple the first portion 41 to the second portion 42, the intermediate coupling portion 45 configured to mutually couple the pair of the coupling portions 43, and a plurality of protrusions 15 projecting from the first portion 41 and the second portion 42.

Underneath the first portion 41, the second portion 42 is arranged across a predetermined virtual axis A. The first portion 41 includes a first engagement hole 3 passing through in an axial direction of the virtual axis A. The second portion 42 includes a second engagement hole 6 passing through in the axial direction of the virtual axis A. The first engagement hole 3 is engaged with a pin (not illustrated) mounted on the vehicle body, and the second engagement hole 6 is engaged with a pin (not illustrated) mounted on the exhaust pipe, thus suspending and supporting the exhaust pipe to the vehicle body via the insulator 40.

The first portion 41 is coupled to the second portion 42 by the pair of the coupling portions 43 separately arranged on both sides in an axis-perpendicular direction of the virtual axis A, and the first portion 41 and the second portion 42 are separately arranged in the vertical direction. Furthermore, the intermediate coupling portion 45 coupling the pair of the coupling portions 43 is arranged between the first portion 41 and the second portion 42. Accordingly, the insulator 40 includes spaces enclosed by the first portion 41 and the second portion 42, the pair of the coupling portions 43, and the intermediate coupling portion 45, so as to pass through the insulator 40.

The pair of the coupling portions 43 include internal surfaces 44 each facing inside. The internal surfaces 44 have curved shapes depressed to the virtual axis A side in front view. The internal surfaces 44 are formed parallel to the virtual axis A and central axes C1 and C2.

The intermediate coupling portion 45 suppresses the pair of the coupling portions 43 from mutually approaching when the first portion 41 separates from the second portion 42 due to the input of the load in the vertical direction. The intermediate coupling portion 45 suppresses the pair of the coupling portions 43 from mutually separating when the first portion 41 approaches the second portion 42. Accordingly, the insulator 40 is difficult to vibrate in the lateral direction caused by the vibration of the insulator 40 in the vertical direction.

The intermediate coupling portion 45 includes a pair of intermediate surfaces 46 that are continuous with the internal surfaces 44 and face the respective first portion 41 and second portion 42. The intermediate surfaces 46 are formed parallel to the virtual axis A.

The first portion 41 and the second portion 42 include a first stopper surface 47 and a second stopper surface 48 (both are inclined surfaces), respectively, between the pair of the coupling portions 43 with intervals to the coupling portions 43. The first stopper surface 47 and the second stopper surface 48 are each continuous with the internal surfaces 44. Here, a surface including the virtual axis A or a surface parallel to the virtual axis A positioned between facing two surfaces among the first stopper surface 47, the second stopper surface 48, the internal surfaces 44, and the intermediate surfaces 46 is defined as a virtual surface B.

The first stopper surface 47 and the second stopper surface 48 include the protrusions 15 over approximately entire surface. The first stopper surface 47 and the second stopper surface 48 are formed so as to project out to one another in rectangular shapes in front view. The second stopper surface 48 is positioned on the lower side of the first stopper surface 47.

The first stopper surface 47 and the second stopper surface 48 incline so as to separate from the virtual surface B while separating a parting line P. The parting line P is positioned, similarly to the first embodiment, on an end side (paper-surface-front side in FIG. 6) in the axial direction of the virtual axis A.

With the insulator 40, when a large compressive load in the vertical direction is input to the insulator 40, the first stopper surface 47 and the second stopper surface 48 collide against the intermediate surfaces 46, thus reducing an excessive deformation of the insulator 40. Similarly to the first embodiment, the protrusions 15 and the inclinations of the first stopper surface 47 and the second stopper surface 48 ensure reducing the occurrence of the abnormal noise caused by the collisions of the first stopper surface 47 and the second stopper surface 48 against the intermediate surface 46 on inputting the load.

When a large compressive load in the lateral direction is input to the insulator 40, the first stopper surface 47 and the second stopper surface 48 collide against the internal surfaces 44, thus reducing an excessive deformation of the insulator 40. In this case again, the protrusions 15 and the inclinations of the first stopper surface 47 and the second stopper surface 48 ensure reducing the occurrence of the abnormal noise caused by the collisions of the first stopper surface 47 and the second stopper surface 48 against the internal surfaces 44 on inputting the load.

As described above, the present invention has been described based on the above-mentioned embodiments. It will be appreciated that the present invention will not be limited to the embodiments described above, but various modifications are possible without departing from the technical scope of the present invention. For example, the shapes of overall and part of the respective insulators 1, 20, 30, and 40 are examples, and various shapes are obviously possible. Needless to say, for example, the overall shapes of the insulators 1, 20, 30, and 40 may be configured to be a well-known shape such as an approximately multangular shape and an approximately semicircular shape in front view.

In the first embodiment described above, the description was given of the case where the first portion 2 includes two first engagement holes 3 and the second portion 5 includes one second engagement hole 6. In the second to fourth embodiments described above, the description was given of the case where the first portions 21, 31, and 41 each include one first engagement hole 3, and the second portions 22, 32, and 42 each include one second engagement hole 6. However, this should not be construed in a limiting sense. Needless to say, the shape and the number of the first engagement hole 3 and the second engagement hole 6 may be appropriately configured corresponding to the shape and the number of brackets and pins mounted to the vehicle body and the exhaust pipe.

In the above embodiments, the description was given of the case where the central axis C1 of the first engagement hole 3 and the central axis C2 of the second engagement hole 6 are parallel to the virtual axis A. However, this should not be construed in a limiting sense. Needless to say, for example, the central axis C1 may be perpendicular to the central axis C2 while any one of the central axis C1 and the central axis C2 is parallel to the virtual axis A. Such insulator is manufactured using a core in addition to the fixed mold and the movable mold. When the central axis C1 and the central axis C2 are each parallel to the virtual axis A, the insulator can be manufactured without the core, thus facilitating manufacturing the insulator.

In the above embodiments, the description was given of the case where the parting line P is arranged on the plane perpendicular to the virtual axis A. However, this should not be construed in a limiting sense. Needless to say, the parting line P may be arranged on a plane not perpendicular to the virtual axis A but intersecting with the virtual axis A. The position of the parting line P may be appropriately configured corresponding to the portions of the respective insulators 1, 20, 30, and 40.

While the description was omitted in the above embodiments, the insulators 1, 20, 30, and 40 can be manufactured by a different material molding (a method for integrating by bonding a plurality of kinds of materials in a molding process). For example, using different materials for the first portion 2 (the first stopper surface 11) and the second portion 5 (the second stopper surface 12) enhances the reduction effect on the abnormal noise caused by the collision of the first stopper surface 11 and the second stopper surface 12.

In the first to third embodiments described above, the description was given of the case where the protrusions 15 are disposed on both the first stopper surfaces 11, 25, and 33 and the second stopper surfaces 12, 26, and 34 facing in the vertical direction. However, this should not be construed in a limiting sense. Needless to say, the protrusions 15 may be disposed on at least one of the first stopper surfaces 11, 25, and 33 and the second stopper surfaces 12, 26, and 34. However, since the insulators 1, 20, and 30 deform in mainly the vertical direction, preferably, the protrusions 15 are disposed on both the first stopper surfaces 11, 25, and 33 and the second stopper surfaces 12, 26, and 34, so as to enhance the reduction effect on the abnormal noise caused by the collision of the surfaces.

In the first and second embodiments described above, the description was given of the case where the angle θ1 is identical to the angle θ2, and the angle θ3 is identical to the angle θ4. However, this should not be construed in a limiting sense. Needless to say, the angle θ1 may be different from the angle θ2, and the angle θ3 may be different from the angle θ4.

In the fourth embodiment described above, the description was given of the case where the intermediate surface 46 of the intermediate coupling portion 45 does not include the protrusions 15. However, this should not be construed in a limiting sense. Needless to say, the intermediate surface 46 may include the protrusions 15. However, the protrusions 15 disposed on the intermediate surface 46 possibly causes the intermediate coupling portion 45 to be easily broken from the bases of the protrusions 15 as the starting points. Not disposing the protrusions 15 on the intermediate coupling portion 45 causes the intermediate coupling portion 45 to be less likely to be broken, thus ensuring the durability of the insulator 40.

### [Reference Signs List]

- 1, 20, 30, 40: insulator
- 2, 21, 31, 41: first portion
- 3: first engagement hole
- 5, 22, 32, 42: second portion
- 6: second engagement hole
- 7, 23, 43: coupling portion
- 11, 25: first stopper surface
- 11a, 25a, 26a: inclined surface
- 12, 34, 48: second stopper surface (inclined surface)
- 15: protrusion
- 26: second stopper surface
- 33, 47: first stopper surface (inclined surface)
- A: virtual axis
- B: virtual surface
- L3, L5: difference-in-height
- L4: height
- P: parting line

## Claims

1. An insulator (1, 20, 30, 40) configured to elastically support an exhaust pipe to a vehicle body, the insulator being made of a rubber-like elastic body, the insulator comprising:
a first portion (2, 21, 31, 41) that includes a first engagement hole (3) configured for being engaged with a side of the vehicle body;
a second portion (5, 22, 32, 42) that includes a second engagement hole (6) configured for being engaged with a side of the exhaust pipe, the second portion (5, 22, 32, 42) being arranged underneath the first portion (2, 21, 31, 41) across a predetermined virtual axis (A);
a pair of coupling portions (7, 23, 43) configured to couple the first portion (2, 21, 31, 41) to the second portion (5, 22, 32, 42), the pair of the coupling portions (7, 23, 43) being separately arranged on both sides in a direction perpendicular to the virtual axis (A);
a first stopper surface (11, 25, 33, 47) and a second stopper surface (12, 26, 34, 48) that are formed on the first portion (2, 21, 31, 41) and the second portion (5, 22, 32, 42), respectively, between the pair of the coupling portions (7, 23, 43) with intervals to the coupling portions (7, 23, 43) ; and
a plurality of protrusions (15) projecting from at least one of the first stopper surface (11, 25, 33, 47) and the second stopper surface (12, 26, 34, 48), wherein
the virtual axis (A) is parallel to at least one of a central axis (C1) of the first engagement hole (3) and a central axis (C2) of the second engagement hole (6), **characterized in that** the plurality of the protrusions (15) are arranged in an axial direction parallel to the virtual axis (A) and the direction perpendicular to the virtual axis(A), and spaces between adjacent protrusions (15) are provided.

2. The insulator (1, 20, 30, 40) according to claim 1, wherein
at least one of the first stopper surface (11, 25, 33, 47) and the second stopper surface (12, 26, 34, 48) has an inclined surface (11a, 12, 25a, 26a, 33, 34, 47, 48) where the protrusions (15) are disposed,
the inclined surface (11a, 12, 25a, 26a, 33, 34, 47, 48) inclines so as to separate from a virtual surface (B) while separating from a parting line (P), the virtual surface (B) is positioned between facing portions, the virtual surface (B) includes the virtual axis (A) or is parallel to the virtual axis (A), and
the protrusions (15) have heights (L4) smaller than a difference-in-height (L3, L5) of the inclined surface (11a, 12, 25a, 26a, 33, 34, 47, 48) in the axis-perpendicular direction.

3. The insulator (1, 20, 30, 40) according to claim 2, wherein
the parting line (P) is configured on an end side in the axial direction of the first stopper surface (11, 25, 33, 47) or the second stopper surface (12, 26, 34, 48).

4. The insulator (1, 20, 30, 40) according to claim 2, wherein
the parting line (P) is configured on a central portion in the axial direction of the first stopper surface (11, 25, 33, 47) or the second stopper surface (12, 26, 34, 48).

5. The insulator (1, 20, 30, 40) according to any one of claims 1 to 4, wherein
a plurality of the protrusions (15) have intervals such that the spaces between the adjacent protrusions (15) are prevented from being filled in a state where the protrusions (15) are collapsed between the first stopper surface (11, 25, 33, 47) and the second stopper surface (12, 26, 34, 48).

6. The insulator (1, 20, 30, 40) according to any one of claims 1 to 5, wherein
a plurality of the protrusions (15) are randomly configured in height (L4).

7. The insulator (1, 20, 30, 40) according to any one of claims 1 to 6, wherein
a plurality of the protrusions (15) are randomly positioned.

8. The insulator (1, 20, 30, 40) according to any one of claims 1 to 7, wherein
the protrusions (15) are disposed at least on portions of the first stopper surface (11, 25, 33, 47) or the second stopper surface (12, 26, 34, 48) excluding the coupling portions (7, 23, 43), the portions of the first stopper surface (11, 25, 33, 47) or the second stopper surface (12, 26, 34, 48) contactably face the coupling portions (7, 23, 43) .

## Patentansprüche

1. Isolierkörper (1, 20, 30, 40), der dazu konfiguriert ist, ein Auspuffrohr an einem Fahrzeugkörper elastisch zu lagern, wobei der Isolierkörper aus einem gummiartigen elastischen Körper hergestellt ist, und der Isolierkörper aufweist:
einen ersten Abschnitt (2, 21, 31, 41), der ein erstes Eingriffsloch (3) enthält, das dazu konfiguriert ist, mit einer Seite des Fahrzeugkörpers im Eingriff zu sein;
einen zweiten Abschnitt (5, 22, 32, 42), der ein zweites Eingriffsloch (6) enthält, das dazu konfiguriert ist, mit einer Seite des Auspuffrohrs im Eingriff zu sein, wobei der zweite Abschnitt (5, 22, 32, 42) jenseits einer vorbestimmten virtuellen Achse (A) unterhalb des ersten Abschnitts (2, 21, 31, 41) angeordnet ist;
ein Paar von Kopplungsabschnitten (7, 23, 43), das dazu konfiguriert ist, den ersten Abschnitt (2, 21, 31, 41) mit dem zweiten Abschnitt (5, 22, 32, 42) zu koppeln, wobei das Paar der Kopplungsabschnitte (7, 23, 43) in einer Richtung senkrecht zu der virtuellen Achse (A) auf beiden Seiten separat angeordnet ist;
eine erste Anschlagfläche (11, 25, 33, 47) und eine zweite Anschlagfläche (12, 26, 34, 48), die zwischen dem Paar der Kopplungsabschnitte (7, 23, 43) jeweils an dem ersten Abschnitt (2, 21, 31, 41) und dem zweiten Abschnitt (5, 22, 32, 42) mit Abständen zu den Kopplungsabschnitten (7, 23, 43) gebildet sind; und
eine Mehrzahl von Vorsprüngen (15), die von zumindest einer von der ersten Anschlagfläche (11, 25, 33, 47) und der zweiten Abschlagfläche (12, 26, 34, 48) vorsteht, wobei
die virtuelle Achse (A) zu zumindest einer von einer Mittelachse (C1) des ersten Eingriffslochs (3) und einer Mittelachse (C2) des zweiten Eingriffslochs (6) parallel ist,
**dadurch gekennzeichnet, dass**
die Mehrzahl der Vorsprünge (15) in einer axialen Richtung parallel zu der virtuellen Achse (A) und der Richtung senkrecht zu der virtuellen Achse (A) angeordnet ist, und Zwischenräume zwischen den benachbarten Vorsprüngen (15) vorgesehen sind.

2. Isolierkörper (1, 20, 30, 40) gemäß Anspruch 1, wobei
zumindest eine von der ersten Anschlagfläche (11, 25, 33, 47) und der zweiten Anschlagfläche (12, 26, 34, 48) eine geneigte Oberfläche (11a, 12, 25a, 26a, 33, 34, 47, 48) hat, wo die Vorsprünge (15) angeordnet sind,
die geneigte Oberfläche (11a, 12, 25a, 26a, 33, 34, 47, 48) geneigt ist, sodass sie sich von einer virtuellen Fläche (B) wegbewegt während sie sich von einer Trennlinie (P) wegbewegt, die virtuelle Fläche (B) zwischen zugewandten Abschnitten positioniert ist, die virtuelle Fläche (B) die virtuelle Achse (A) enthält oder parallel zu der virtuellen Achse (A) ist, und
die Vorsprünge (15) Höhen (L4) haben, die in der Achs-senkrechten Richtung kleiner als eine Höhendifferenz (L3, L5) der geneigten Oberfläche (11a, 12, 25a, 26a, 33, 34, 47, 48) sind.

3. Isolierkörper (1, 20, 30, 40) gemäß Anspruch 2, wobei
die Trennlinie (P) in der axialen Richtung der ersten Anschlagfläche (11, 25, 33, 47) oder der zweiten Anschlagfläche (12, 26, 34, 48) an einer Endseite ausgebildet ist.

4. Isolierkörper (1, 20, 30, 40) gemäß Anspruch 2, wobei
die Trennlinie (P) in der axialen Richtung der ersten Anschlagfläche (11, 25, 33, 47) oder der zweiten Anschlagfläche (12, 26, 34, 48) in einem zentralen Abschnitt ausgebildet ist.

5. Isolierkörper (1, 20, 30, 40) gemäß einem der Ansprüche 1 bis 4, wobei
eine Mehrzahl der Vorsprünge (15) Abstände so hat, dass die Zwischenräume zwischen den benachbarten Vorsprüngen (15) daran gehindert werden, in einem Zustand in dem die Vorsprünge (15) zwischen der ersten Anschlagfläche (11, 25, 33, 47) und der zweiten Anschlagfläche (12, 26, 34, 48) kollabieren, gefüllt zu werden.

6. Isolierkörper (1, 20, 30, 40) gemäß einem der Ansprüche 1 bis 5, wobei
eine Mehrzahl der Vorsprünge, (15) in der Höhe (L4) willkürlich ausgebildet ist.

7. Isolierkörper (1, 20, 30, 40) gemäß einem der Ansprüche 1 bis 6, wobei
eine Mehrzahl der Vorsprünge (15) willkürlich angeordnet ist.

8. Isolierkörper (1, 20, 30, 40) gemäß einem der Ansprüche 1 bis 7, wobei
die Vorsprünge (15) zumindest auf Abschnitten der ersten Anschlagfläche (11, 25, 33, 47) oder der zweiten Anschlagfläche (12, 26, 34, 48), die die Kopplungsabschnitte (7, 23, 43) ausschließen, angeordnet sind, wobei die Abschnitte der ersten Anschlagfläche (11, 25, 33, 47) oder der zweiten Anschlagfläche (12, 26, 34, 48) den Kopplungsabschnitten (7, 23, 43) erreichbar zugewandt sind.

## Revendications

1. Isolateur (1, 20, 30, 40) configuré pour porter de manière élastique un tuyau d'échappement par rapport à une carrosserie de véhicule, l'isolateur étant constitué d'un corps élastique caoutchouteux, l'isolateur comprenant :
une première partie (2, 21, 31, 41) qui inclut un premier trou de mise en prise (3) configuré pour être mis en prise avec un côté de la carrosserie de véhicule ;
une seconde partie (5, 22, 32, 42) qui inclut un second trou de mise en prise (6) configuré pour être mis en prise avec un côté du tuyau d'échappement, la seconde partie (5, 22, 32, 42) étant agencée en dessous de la première partie (2, 21, 31, 41) à travers un axe virtuel (A) prédéterminé ;
une paire de parties d'accouplement (7, 23, 43) configurées pour accoupler la première partie (2, 21, 31, 41) à la seconde partie (5, 22, 32, 42), la paire des parties d'accouplement (7, 23, 43) étant agencées de manière séparée sur les deux côtés dans une direction perpendiculaire à l'axe virtuel (A) ;
une première surface de butée (11, 25, 33, 47) et une seconde surface de butée (12, 26, 34, 48) qui sont formées sur la première partie (2, 21, 31, 41) et la seconde partie (5, 22, 32, 42), respectivement, entre la paire des parties d'accouplement (7, 23, 43) avec des intervalles jusqu'aux parties d'accouplement (7, 23, 43) ; et
une pluralité de saillies (15) dépassant d'au moins une parmi la première surface de butée (11, 25, 33, 47) et la seconde surface de butée (12, 26, 34, 48), dans lequel
l'axe virtuel (A) est parallèle à au moins un parmi un axe central (C1) du premier trou de mise en prise (3) et un axe central (C2) du second trou de mise en prise (6),
**caractérisé en ce que** la pluralité des saillies (15) sont agencées dans une direction axiale parallèle à l'axe virtuel (A) et la direction perpendiculaire à l'axe virtuel (A), et
des espaces entre des saillies (15) adjacentes sont prévus.

2. Isolateur (1, 20, 30, 40) selon la revendication 1, dans lequel
au moins une parmi la première surface de butée (11, 25, 33, 47) et la seconde surface de butée (12, 26, 34, 48) a une surface inclinée (11a, 12, 25a, 26a, 33, 34, 47, 48) où les saillies (15) sont disposées,
la surface inclinée (11a, 12, 25a, 26a, 33, 34, 47, 48) s'incline de façon à se séparer d'une surface virtuelle (B) tout en se séparant d'une ligne de partage (P), la surface virtuelle (B) est positionnée entre des parties se faisant face, la surface virtuelle (B) inclut l'axe virtuel (A) ou est parallèle à l'axe virtuel (A), et
les saillies (15) ont des hauteurs (L4) plus petites qu'une différence de hauteur (L3, L5) de la surface inclinée (11a, 12, 25a, 26a, 33, 34, 47, 48) dans la direction perpendiculaire à l'axe.

3. Isolateur (1, 20, 30, 40) selon la revendication 2, dans lequel
la ligne de partage (P) est configurée sur un côté d'extrémité dans la direction axiale de la première surface de butée (11, 25, 33, 47) ou de la seconde surface de butée (12, 26, 34, 48).

4. Isolateur (1, 20, 30, 40) selon la revendication 2, dans lequel
la ligne de partage (P) est configurée sur une partie centrale dans la direction axiale de la première surface de butée (11, 25, 33, 47) ou de la seconde surface de butée (12, 26, 34, 48).

5. Isolateur (1, 20, 30, 40) selon l'une quelconque des revendications 1 à 4, dans lequel
une pluralité des saillies (15) ont des intervalles de telle sorte que les espaces entre les saillies (15) adjacentes ne puissent pas être remplis dans un état où les saillies (15) s'affaissent entre la première surface de butée (11, 25, 33, 47) et la seconde surface de butée (12, 26, 34, 48).

6. Isolateur (1, 20, 30, 40) selon l'une quelconque des revendications 1 à 5, dans lequel
une pluralité des saillies (15) sont configurées de manière aléatoire en hauteur (L4).

7. Isolateur (1, 20, 30, 40) selon l'une quelconque des revendications 1 à 6, dans lequel
une pluralité des saillies (15) sont positionnées de manière aléatoire.

8. Isolateur (1, 20, 30, 40) selon l'une quelconque des revendications 1 à 7, dans lequel
les saillies (15) sont disposées au moins sur des parties de la première surface de butée (11, 25, 33, 47) ou de la seconde surface de butée (12, 26, 34, 48) à l'exclusion des parties d'accouplement (7, 23, 43), les parties de la première surface de butée (11, 25, 33, 47) ou de la seconde surface de butée (12, 26, 34, 48) font face de manière à pouvoir être en contact aux parties d'accouplement (7, 23, 43).
